# EUROPÄISCHE PATENTSCHRIFT

(11) **EP 1 008 230 B1**
(45) Veröffentlichungstag und Bekanntmachung des Hinweises auf die Patenterteilung: **26.06.2002**
(21) Anmeldenummer: 97937546.6
(22) Anmeldetag: 01.08.1997
(51) Int. Cl.: H02K 41/02, H02K 1/18

(54) **STATORPLATTE EINES LINEAREN ELEKTRISCHEN DIREKTANTRIEBES**
STATOR PLATE OF A LINEAR ELECTRIC DIRECT DRIVE
PLAQUE STATORIQUE D'UN ENTRAINEMENT DIRECT ELECTRIQUE LINEAIRE

(30) Priorität: 01.08.1996 DE 19631106
(43) Veröffentlichungstag der Anmeldung: 14.06.2000
(73) Patentinhaber: BRANDSTETTER, Heinz Peter, 1130 Wien (AT)
(72) Erfinder: BRANDSTETTER, Heinz Peter, 1130 Wien (AT)
(74) Vertreter: Viering, Jentschura & Partner
(86) Internationale Anmeldenummer: EP9704204
(87) Internationale Veröffentlichungsnummer: WO9806166

(56) Entgegenhaltungen:
- EP-A- 0 130 357
- EP-A- 0 250 328
- US-A- 3 644 762
- US-A- 3 656 014
- US-A- 4 859 974
- US-A- 5 334 892
- PATENT ABSTRACTS OF JAPAN vol. 007, no. 239 (E-206), 25.Oktober 1983 & JP 58 127555 A (MATSUSHITA DENKI SANGYO KK), 29.Juli 1983,
- PATENT ABSTRACTS OF JAPAN vol. 008, no. 231 (E-274), 24.Oktober 1984 & JP 59 113765 A (MATSUSHITA DENKI SANGYO KK), 30.Juni 1984,

## Beschreibung

Die Erfindung betrifft eine Statorplatte oder Statorelement eines elektrischen linearen Direktantriebes.

Für die Zwecke dieser Anmeldung soll unter "elektrisch" auch "elektromagnetisch" verstanden werden. Bei dem Statorelement handelt es sich um ein langestrecktes Statorelement in Form einer langestreckten Platte oder eines Balkens oder Stabes.

Lineare Direktantriebe finden zunehmend im Bereich der Werkzeugmaschinen sowie in Leiterplatten-Bearbeitungszentren Anwendung. Sie zeichnen sich besonders u.a. durch hohe Beschleunigung und Verfahrgeschwindigkeit, einfache und kostengünstige Montage sowie durch hohe Vorschubkräfte bei kleinem Bauvolumen aus. Besonders beim Einsatz von Luftlagertechnik tritt während der gesamten Lebensdauer kein Verschleiß auf.

Aus dem DE-GBM 92 15 587.1 ist es beispielsweise bekannt, einen Zweikoordinaten-Schrittantrieb als flächigen (planaren) Zweikoordinatenantrieb auszubilden, bei dem ein Gestellteil den Passivteil des Antriebes bildet und aus einer horizontalen Platte besteht, an deren Unterseite ferromagnetische Pole angeordnet sind. Der elektrisch aktivierbare Antriebsteil wird von einem über die Plattenfläche verfahrbaren Schlitten ausgebildet, der eine wesentlich kleinere Grundfläche als die Fläche des plattenförmigen Passivteils aufweist, wobei der Antriebsteil und der Passivteil in zwei zueinander senkrechten Koordinatenrichtungen verfahrbar magnetisch zusammenwirkend ausgebildet sind.

Der Passivteil, auch Statorelement oder Statorplatte genannt, weist eine Statorfläche auf, die je nach Antriebsart mit Polen, Permanentmagneten oder Rückschlußschienen versehen ist. Vor allem bei luftgelagerten Direktantrieben werden insbesondere bei großen Abmessungen der Antriebsteile (Anker) und bei großen Verfahrwegen strenge Anforderungen an die Genauigkeit der einander zugewandten Flächen des passiven Stators und des aktiven Ankers (Läufer) gestellt, um die Ausbildung eines zwischen ihnen liegenden Luftkissens, das sich im Gleichgewicht mit der magnetischen Anziehungskraft befindet, zu ermöglichen. Die Statoren übernehmen dabei gleichzeitig die Funktion der Führung.

Schwankungen in der Dicke des Luftkissens um einige wenige Mikrometer können zur Instabilität und bis zum partiellen Zusammenbruch des Luftkissens führen, wodurch die Bewegungsfähigkeit des Ankers, z.B. durch Schwingungsbildung oder ruckartige Bewegungen, eingeschränkt werden oder vollständig verlorengehen kann.

Große Flächenstatoren werden nach dem Stand der Technik aus verrippten Gußeisenplatten, ähnlich wie Meß- oder Anreißplatten, geschweißten versteiften Stahlkonstruktionen, Platten aus Granit, Mineralguß oder ähnlichen Mineralien als Träger hergestellt, wobei auf der bearbeiteten Fläche, welche die Arbeitsfläche des Stators darstellt, Pole aufweisendes Weicheisenblech, Permanetmagneten oder Rückschlußschienen befestigt werden. Sowohl Gußplatten als auch geschweißte Platten, neigen dazu, sich selbst nach einem Spannungsfreiglühen wieder zu verziehen. Sie sind außerdem schwer und haben aufgrund ihres hohen Eigengewichtes eine hohe Eigendurchbiegung, außer sie werden in engen Abständen unterstützt oder vorgespannt. Mineralplatten haben ein hohes Gewicht, sind schwer zu bearbeiten, empfindlich und teuer.

Im Falle von linearen elektrischen oder elektromagnetischen Antrieben ist es schwierig, mit vertretbarem Aufwand Statorschienen ab 2m Länge ausreichend geradlinig zu montieren, auch wenn sie geradlinig gefertigt wurden, da auch im Falle von dazwischenliegenden Stützpunkten eine verspannungsfreie Montage gewährleistet sein muß. Im Falle von planaren oder Flächenantrieben sind Statorplatten mit Abmessungen von 1,5m x 1,5m kaum im praktischen Einsatz, da die nötige Ebenheit der Fläche, insbesondere unter Belastung aufgrund einer Nutzlast, schwer einzuhalten ist. Die Anforderungen an Geradlinigkeit und Ebenheit verschärfen sich mit zunehmenden Ankerabmessungen, wie sie für höhere Leistungen erforderlich sind. Zur Erreichung einer einwandfreien Luftlagerung darf der Luftspalt über die gesamte Ankerfläche nur max ±3µm um den idealen Mittelwert betragen. Im Falle eines Flächenantriebes mit einem Anker von 140mm x 140mm sind unter dieser Voraussetzung Ebenheitstoleranzen des Stators von ca. ±0,02 mm/m gefordert, bei einem 450 mm Anker muß die Ebenheit besser als ±0,006 mm/m sein, was besonders bei großen Flächen, beispielsweise 2 m x 4 m, fertigungstechnisch schwer zu erreichen ist, besonders bei wechselnden Belastungen im Betrieb. Derartige Platten können daher auch nicht in verschiedenen Orientierungen z.B. liegend oder hängend eingesetzt werden, sondern nur in jener Lage, für die sie berechnet, eventuell vorgespannt und planbearbeitet wurden.

Durch die Erfindung werden Statorplatten der eingangs erwähnten Art geschaffen, die sich durch hohe Ebenheit und Steifigkeit bei geringem Gewicht auszeichnen, und die geeignet sind, lineare bzw. planare(Flächen-) Antriebe auch bei großen Verfahrwegen mit leistungsstarken Ankern, daß heißt großflächigen Ankern, zu betreiben.

Dies wird erfindungsgemäß durch eine Statorplatte oder ein Statorelement für einen linearen elektrischen oder elektromagnetischen Direktantrieb bzw. eines linearen oder elektromagnetischen Direktantriebes dadurch erreicht, daßdie Statorplatte als planparallele Sandwichplatte ausgebildet ist, mit einem Wabenstrukturkern mit auf dem Wabenstrukturkern befestigten Abdeckplatten, wobei wenigstens eine der Abdeckplatten eine Statorfläche aufweist.

Die Vorteile einer derartigen Statorplatte bestehen in einer hohen Steifigkeit bei geringem Gewicht. Die Wabenstrukturkerne können im wesentlichen aus reinem Kunststoff, aus Stahl, Aluminium, Stahllegierungen oder dergleichen bestehen. Die auf dem Wabenstrukturkern befestigten Abdeckplatten werden in der Regel aus Stahl oder Aluminium gefertigt und werden mit dem Wabenstrukturkern verschweißt oder verklebt. Wenigstens eine der Abdeckplatten weist eine Statorfläche auf, die je nach Antriebsart mit Polen, Permanetmagneten oder Rückschlußschienen versehen ist. Bei Statorplatten für eindimensionale Direktantriebe können an der Statorplatte mechanische Führungselemente, beispielsweise Führungsschienen, zum Führen des Aktivteiles vorgesehen sein.

An einer Statorplatte für einen luftgelagerten Schrittmotor-Direktantrieb ist wenigstens eine Abdeckplatte mit einem genutetem Weicheisenblech versehen, an dem die Statorfläche ausgebildet ist. Die Polstruktur der Statorfläche ist hierbei durch quer zur Bewegungsrichtung verlaufende Nuten im Weicheisenblech gebildet, wobei die Nuten mit einem nichtmagnetisierbaren Material, beispielsweise einem Gießharz, ausgefüllt sind und die Fläche anschließend feingefräst oder geschliffen ist. Für einen luftgelagerten planaren oder Zweikoordinaten-Direktantrieb wird die Polstruktur der Statorfläche durch Kreuznuten gebildet, die ihrerseits mit nichtmagnetisierbaren Material ausgefüllt sind.

Wenigstens eine der Abdeckplatten, an der eine Statorfläche ausgebildet ist, kann eine mit hoher Genauigkeit plane Grundplatte aus beispielsweise Aluminium sein, auf der das genutete Weicheisenblech durch z.B. Verkleben befestigt ist, ohne daß Probleme wegen der unterschiedlichen Wärmeausdehnung entstehen, da die Verklebung eine Ausgleichsbewegung zuläßt. Derartige Platten haben die höchste Steifigkeit bei geringstem Gewicht. Weiterhin kann die eine Statorfläche aufweisende Abdeckplatte auch selbst im wesentlichen aus Weicheisenblech bestehen, in das die entsprechenden Nuten zur Bildung der Polstruktur eingearbeitet sind.

Eine vorteilhafte Ausgestaltung der Sandwich-Statorplatte besteht weiter darin, daß die Statorfläche an der Abdeckplatte der großflächigen Unterseite oder der großflächigen Oberseite vorgesehen werden kann. Da die Sandwichplatte mit einem Wabenstrukturkern als isotropes Gebilde auf beiden Seiten die gleichen Eigenschaften hat, ist es aber auch möglich, auf beiden großflächigen Seiten Weicheisenblech vorzusehen und durch Nutung als Stator auszubilden. Dies ermöglicht auch, solche Sandwichplatten grundsätzlich in beliebiger Richtung zu belasten, daß heißt entweder an der Unterseite zu unterstützen oder an der Oberseite aufzuhängen, wobei sich der Anker mit seiner Nutzlast an der jeweils gegenüberliegenden Seite befindet, im ersten Fall durch Ausübung von Druck auf die Platte und Stützlager, im zweiten Fall durch Zug in einer Richtung von der Platte und den Aufhängungen weg. Die Ausbildung der Sandwichplatte mit beidseitigen Statorflächen ist besonders bei kleineren und dünneren Statorelementen von Bedeutung und eröffnet Möglichkeiten für zusätzliche Anwendungsbereiche. Derartige Platten können z.B. ihrerseits bewegt werden, wodurch sich eine Bewegungsüberlagerung ergibt, beispielsweise um die Bewegung eines Werkstückes zu egalisieren.

Ein weiterer Vorteil der Sandwichplatte besteht darin, daß zusätzlich auch wenigstens eine von seitlichen Abdeckplatten mit einer Statorfläche versehen sein kann, indem die seitliche Abdeckplatte entsprechend steif ausgeführt und mit Weicheisenblech belegt wird oder insgesamt aus Weicheisenblech mit entsprechender Nutung besteht. Eine solche Statorplatte kann somit mit zwei oder drei Statorflächen für einen L-förmigen bzw. U-förmigen Anker-Antriebsteil versehen sein.

Nachdem die Nutungen und das Planschleifen der Weicheisenbleche auf der Platte erfolgen, erweist es sich als Vorteil, daß derartige Sandwichplatten mit Wabenstrukturkern als planparallele rechtwinklige Quader gebaut werden können, die auf jeder Fläche zum Bearbeiten aufgelegt und gespannt werden können, ohne daß ein Verzug eintritt. Durch die hohe Genauigkeit, mit der die Abdeckplatten von derartigen quaderförmigen Sandwichplatten plangefräst oder geschliffen werden können, ist es möglich, die Weicheisenbleche in kleineren Stücken auf kleineren Fräsmaschinen zu nuten und erst dann aufzukleben und planzuschleifen. Dabei ergeben sich bedeutende Kostenersparnisse gegenüber dem Einsatz von großen Fräsmaschinen oder Bohrwerken. Weitere Vorteile von Sandwichplatten sind, daß sie in relativ großen Abmessungen (bis zu 2,5m x 5m) bei kleinem Gewicht hergestellt werden können und daß sie präzise aneinandergefügt und miteinander verbunden werden können, um noch größere Abmessungen zu erreichen.

Der Wabenstrukturkern, auf dem die Abdeckplatten befestigt werden, kann beispielsweise im wesentlichen aus reinem Kunststoff, Stahl, Aluminium oder Stahllegierungen, vorzugsweise jedoch aus Polykarbonat, bestehen. Die Wabenstruktur wird dabei aus dünnwandigen, feinen Polykarbonatröhren gebildet, die miteinander verklebt sind. Wahlweise kann der Kern eine Honigwabenstruktur, Trapezwabenstruktur, Röhrenstruktur oder dergleichen aufweisen.

Außer aus einfachen Wabenplatten bzw. Wabenbalken kann die Statorplatte bzw. das Statorelement auch aus unterschiedlichen Wabenplatten bzw. Wabenbalken, deren Wabenstrukturen unterschiedlich sind oder eine unterschiedliche Ausrichtung aufweisen, im Verbund zusammengebaut sein, was vorzugsweise ebenfalls durch Kleben erfolgt. Derartige Verbund-Statorplatten bzw. Verbund-Statorelemente können auch als Winkelprofilkörper ausgebildet sein. Außer in einer Versteifungswirkung in einer zusätzlichen Richtung kann der Zweck z.B. eines seitlich angeklebten Paneels hauptsächlich darin bestehen, daß dieses dann ebenfalls mit einem Statorblech versehen sein kann. Dadurch können besonders kräftige Linearachsen mit L-Ankerantriebsteilen gebaut werden. Auch können damit U-Antriebe verwirklicht werden, wenn zusätzlich auf beiden Seiten Statorbleche vorgesehen werden. Derartige zwei- oder dreiseitig aktive Linearstatoren können für Zwei- oder Mehrkoordinaten-Portalsysteme oder kreuzförmig ausgebildete Zweikoordinatenantriebe verwendet werden.

Als Alternative zu dem Wabenstrukturkern kann auch ein Hartschaumkern vorgesehen sein, wobei das Schaummaterial aus einem hartgeschäumten Kunststoffmaterial, insbesondere einem Polyurethanschaummaterial, oder einem Metallschaummaterial sein kann. Außerdem kann die Statorplatte bzw. das Statorelement einen in sich geschlossenen Außenquerschnitt aus den Abdeckplatten aufweisen, d.i. als Kasten- oder Hohlprofilkörper ausgebildet sein, die nachträglich mit einem geeigneten Metallbzw. sonstigen Werkstoff ausgeschäumt sind.

Eine erfindungsgemäße Sandwichplatte mit Stahlwabenkern, bei der die großflächige obere und großflächige untere Abdeckplatte jeweils eine Stahlplatte ist, hat gemäß einer beispielhaften Ausführungsform Abmessungen von 2,4m x 1,5m x 0,3m, die im Abstand von 1,35m unterstützt wird. Sie hat eine Eigendurchbiegung von 6,6µm und mit einer zusätzlichen Fremdlast von 500kg insgesamt nur 15µm Durchbiegung. Dabei wiegt die Statorplatte nur 600kg. Selbst im ungünstigsten Belastungsfall kann ein für ±3µm maximaler Ebenheits-Abweichung geeigneter Anker mit einer Größe von etwa 300mm x 300mm verwendet werden, weil in seinem Bereich die größte Abweichung der Ebenheit des Stators nur etwa 3µm beträgt (15µm max. Durchbiegung in der Mitte zwischen den Stützpunkten ergibt auf jeder Seite des Ankers von 300mm ca. 3µm Abweichung von der Ebene). Mit einer zentralen Unterstützung reduzieren sich die Durchbiegungen auf wenige µm, wodurch praktisch beliebig große Anker verwendet werden können. Die größten praktisch verwirklichten Ankerabmessungen liegen bei 450mm x 450mm, mit statischen Haltekräften in x- und y-Richtung von je 540N. Im dynamischen Fall können damit Nutzlasten von 30kg horizontal mit Beschleunigungen von über 15m/s² bewegt werden.

Die Erfindung wird nachfolgend anhand eines bevorzugten Ausführungsbeispiels unter Bezugnahme auf die Zeichnung näher erläutert. In der Zeichnung zeigen:
Fig. 1 eine Statorplatte für einen luftgelagerten Zweikoordinaten-Direktantrieb
Fig. 2 eine Statorplatte für einen luftgelagerten Schrittmotor-Direktantrieb
Fig. 3 eine Statorplatte, bei der eine Abdeckplatte im wesentlichen aus dem genuteten Weicheisen gebildet ist
Fig. 4A-4F Statorplatten bzw. balkenförmige Statorelemente, wobei auch die Herstellungsweisen erläuternd dargestellt sind
Fig. 5 eine aus zwei Platten mit Wabenstrukturkern zusammengebaute Statorplatte mit Abdeckplatten im Querschnitt in Explosionsdarstellung
Fig. 6 eine gebaute Winkelprofil-Statorplatte mit Abdeckplatten im Querschnit in Explosionsdarstellung
Fig. 7 eine Statorplatte mit einem Wabenstrukturkern aus zwei zusammengebauten Wabenstrukturteilen im Querschnitt

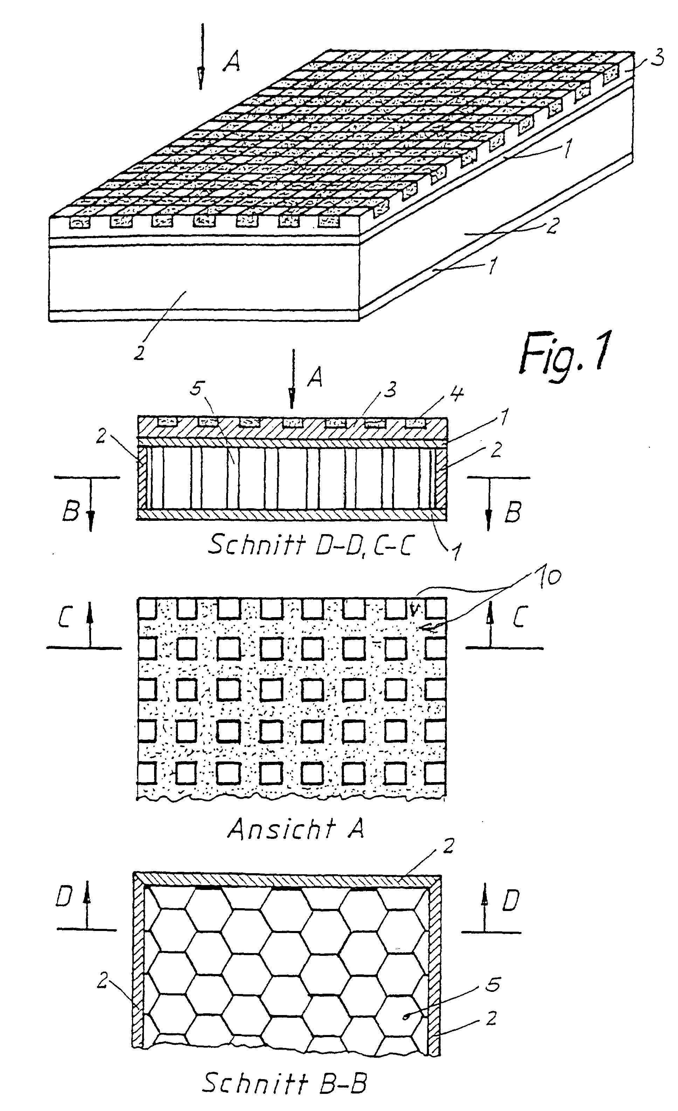

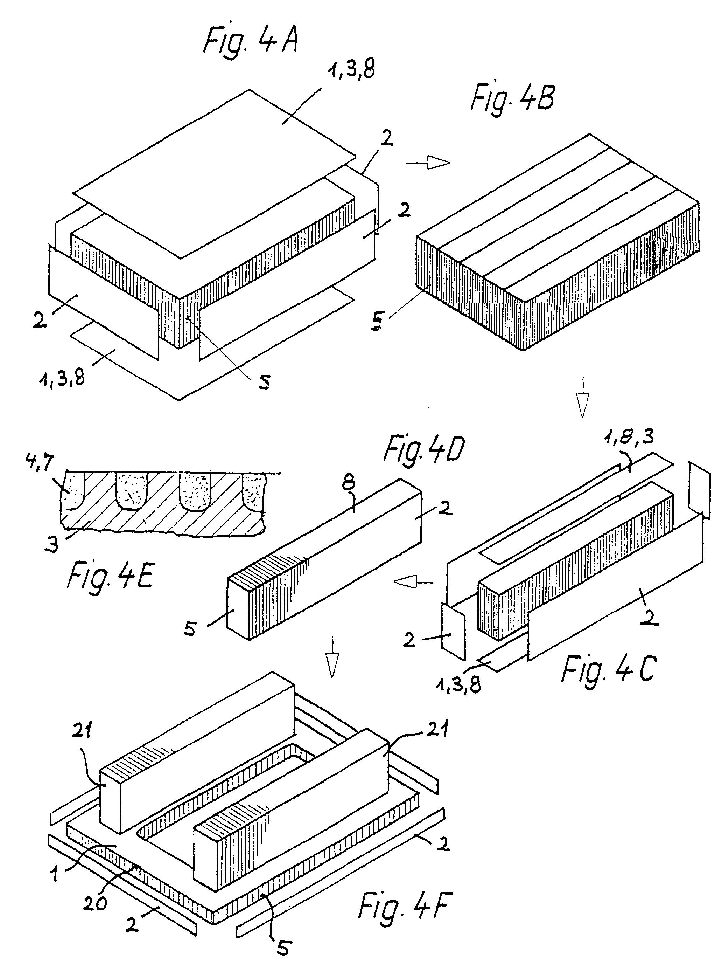

Die Statorplatte nach Fig. 1 weist einen Honigwabenstrukturkern 5 auf. Dieser Wabenstrukturkern 5 weist ringsum seitliche Abdeckplatten 2 sowie je eine Abdeckplatte 1 auf der großfächigen Ober- und großflächigen Unterseite auf. Auf die Abdeckplatte 1 der großflächigen Oberseite ist ein Weicheisenblech 3 z.B. aufgeklebt. Die Polstruktur dieser Sandwich-Statorplatte ist durch Kreuznuten 10 gebildet. Die Kreuznuten 10 sind mit einem nichtmagnetisierbarem Gießharz 4 aufgefüllt (vgl. auch Fig. 4E). Diese Polstruktur eignet sich für die Verwendung von Zweikoordinaten-Direktantrieben. Auf die Polstruktur wird ein in der Zeichnung nicht dargestellter Schlitten mit seinem Anker derart aufgesetzt, daß dieser der Polstruktur der Sandwich-Statorplatte zugewandt ist. Durch entsprechendes Aktivieren durch Stromfluß durch entsprechende Wicklungen des Ankers läßt sich dieser in die jeweils gewünschte Richtung bewegen.

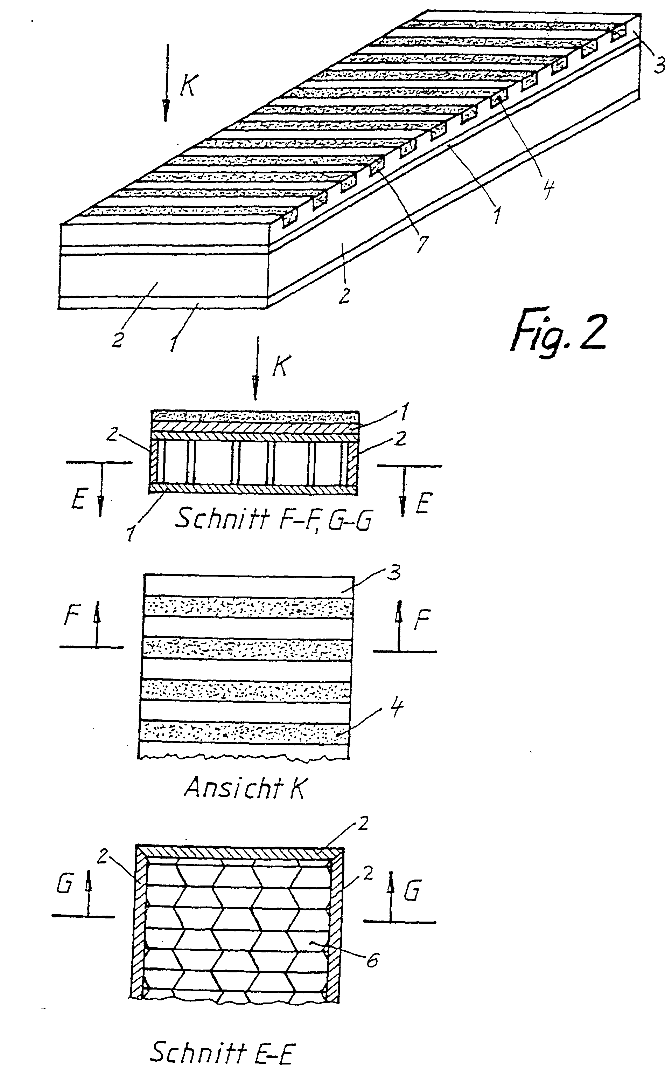

In Fig. 2 ist eine Sandwich-Statorplatte für einen linearen luftgelagerten Schrittmotor-Direktantrieb dargestellt. Der gesamte Aufbau der Statorplatte entspricht im wesentlichen dem Aufbau der Statorplatte nach Fig. 1. Unterschiede bestehen lediglich bezüglich der Breite der gesamten Statorplatte, der Polstruktur und der Wabenkernstruktur 6. Die Polstruktur der Statorfläche ist durch Nuten 7 im Weicheisenblech 3 ausgebildet, die quer zur Bewegungsrichtung des Aktivteiles verlaufen. Die Nuten 7 sind ebenfalls mit einem nichtmagnetisierbaren Gießharz 4 ausgefüllt. Der Wabenstukturkern 6 ist durch im Querschnitt trapezförmige Röhren gebildet.

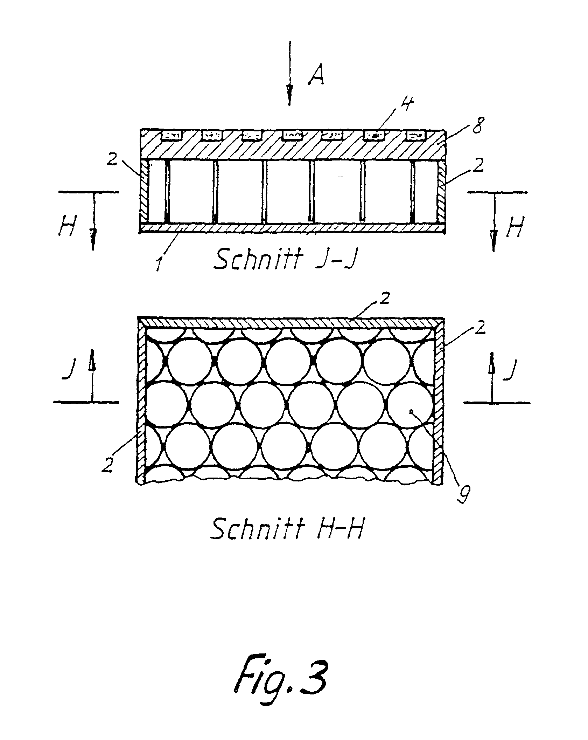

In Fig. 3 ist eine Variante einer Sandwich-Statorplatte gezeigt, bei der die Abdeckplatte der großflächigen Oberseite im wesentlichen aus dem genuteten Weicheisenblech 8 besteht. Der Wabenstrukturkern 9 besteht aus dünnwandigen, feinen Polykarbonatröhren, die miteinander verklebt sind.

Aus den Fig. 4A bis 4F sind einige Ausführungsformen mit angedeuteter Herstellungsweise ersichtlich. Fig. 4A zeigt einen als große rechteckige Platte ausgeführten Wabenstrukturkern 5, auf dessen Oberseite und Unterseite Abdeckplatten 1 insbesondere aufgeklebt werden können, falls die Größe des Wabenstrukturkerns 5 der Größe der herzustellenden Statorplatte entspricht. Auf die Abdeckplatten 1 können, falls gewünscht, Weicheisen-Statorbleche 3 (nicht gezeigt) aufgeklebt werden. Es ist auch möglich, eine oder beide,der Abdeckplatten 1 selbst als Statorbleche 8 auszuführen. Auf die Seiten des Wabenstrukturkerns 5 können entsprechend seitliche Abdeckplatten 2 aufgeklebt werden, die je nach Bedarf ebenfalls mit einem Statorblech 3 belegt werden können oder auch selbsr als Statorblech 8 ausgebildet sein können.

Fig. 4B und Fig. 4C zeigen, daß der Wabenstrukturkern 5 aus Fig. 4A in einzelne Streifen zersägt werden kann (Fig. 4B), um Wabenstrukturkerne 5 für stab- oder balkenförmige Statorelemente zu erhalten, die dann entsprechend Fig. 4A mit Abdeckplatten 1, 2 versehen werden können, wobei es ebenfalls möglich ist, die eine oder andere Abdeckplatte 1, 2 mit einem Statorblech 8 zu belegen oder selbst als Statorblech 3 auszuführen. In Fig. D ist ein balkenförmiges Statorelement gezeigt, bei dem der Wabenstrukturkern 5 in Anpassung an einen L- oder U-Anker-Antriebsteil an zwei oder drei Seiten mit einem Statorblech 8 bestückt ist.

Mit Fig. 4E wird im Querschnitt ein Statorblech 3 mit als Quernuten 7 ausgebildeten Nuten gezeigt, die mit einem Gießharz 4 ausgefüllt sind.

In Fig. 4F ist ein Beispiel gezeigt, nach dem auf einer Grundplatte 20 mit Wabenstrukturkern 5 und Abdeckplatten 1, 2 zwei balkenförmige Statorelemente 21 parallel im Abstand voneinander zur Ausbildung von Stator-Führungsschienen aufgebaut sind.

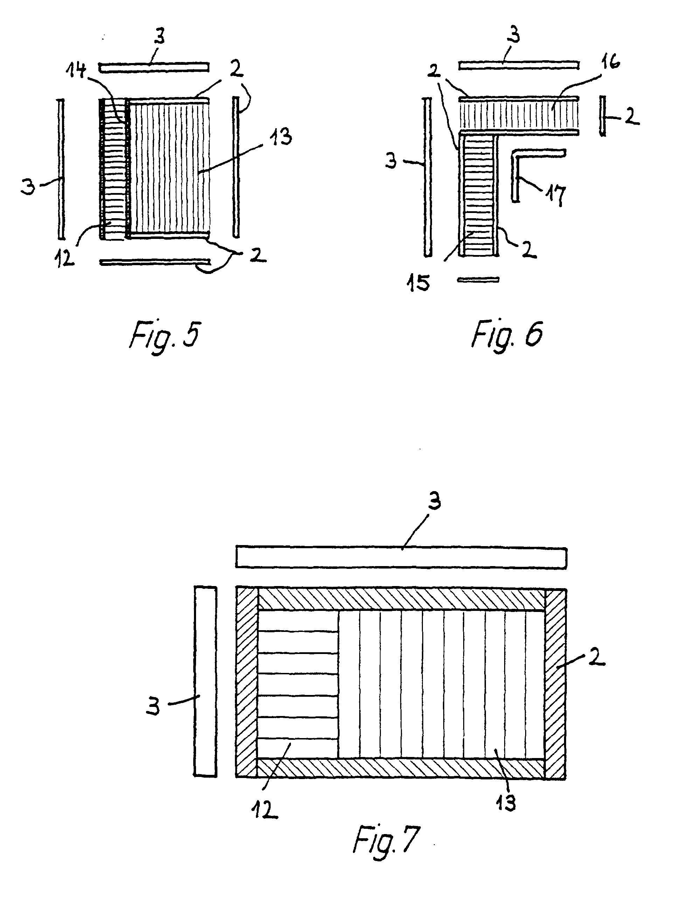

Fig. 5 zeigt im Querschnitt ein balkenförmiges Statorelement, das aus zwei Sandwichplatten 12, 13 mit Wabenstrukturkernen zusammengebaut ist. Die Wabenstrukturen der beiden Sandwichplatten 12, 13 sind mit ihrer Richtung höchster Steifigkeit um 90° gegeneinander versetzt, wobei zwischen den Sandwichplatten 12, 13 eine Zwischenplatte 14 eingebaut ist. Durch diese unterschiedliche Ausrichtung der Wabenstrukturen eignen sich die Oberseite und die Unterseite des Verbundbalkens hinsichtlich der Steifigkeit gegen Durchbiegungen gleichermaßen gut für die Abstützung eines Statorbleches wie die in der Figur linke Seite des Balkens.

Die einzelnen Bauteile sind miteinander verklebt. Auf der Oberseite und der Unterseite des rechten Wabenstrukturkerns 13 sind Abdeckplatten 2 aufgeklebt. Die Oberseite des Verbundstatorelements weist eine zusätzliche Abdeckplatte auf, die als Statorblech 3 ausgebildet sein kann. Die linke Abdeckplatte 1 kann ebenfalls mit einem Statorblech 3 belegt sein.

Fig. 7 zeigt eine ähnliche Statorplatte wie Fig. 5 mit zwei im rechten Winkel zueinander ausgerichtet zusammengeklebten Wabenstrukturkernteilen 12, 13, die ringsum mit Abdeckplatten 2 belegt sind. Bei der Ausführungsform nach Fig. 7 fehlt die Zwischenplatte 14 der Ausführungsform nach Fig. 5. Auch nach Fig. 7 können auf der Oberseite und der in der Figur linken Seite Statorbleche 3 aufgeklebt sein, die entsprechend der Ausrichtung der Wabenstrukturteile senkrecht zu den Wabenreihen verlaufen und die daher in gleichem Maße biegesteif abgestützt sind.

Fig. 6 zeigt eine Ausführungsform, bei der die Statorplatte als Winkelplatte mit zwei im rechten Winkel zueinander zusammengebauten Sandwichplatten mit Wabenstrukturkern 15, 16 gestaltet ist, die jeweils mit einer Abdeckplatte 2 an ihrer Oberseite und ihrer Unterseite belegt sind. An der Winkelaußenseite sind Statorbleche 3 aufgeklebt, die entsprechend der Ausführungen zu Fig. 5 über die entsprechend ausgerichteten Wabenstrukturkerne 15, 16 durchbiegungssteif abgestütz sind.

## Patentansprüche

1. Statorplatte oder Statorelement für einen linearen elektrischen oder elektromagnetischen Direktantrieb, wobei die Statorplatte als planparallele Sandwichplatte ausgebildet ist, mit einem Wabenstrukturkern ((5, 6, 9) mit auf dem Wabenstrukturkern (5, 6, 9) befestigten Abdeckplatten (1, 2), wobei wenigstens eine der Abdeckplatten (1, 2) eine Statorfläche aufweist.

2. Statorplatte oder Statorelement nach Anspruch 1,
**dadurch gekennzeichnet, daß**
an der Statorplatte mechanische Führungselemente zum Führen eines Antriebsteiles vorgesehen sind und die Statorfläche je nach Antriebsart mit Polen oder Permanentmagneten oder Rückschlußschienen versehen ist.

3. Statorplatte oder Statorelement nach Anspruch 1 oder 2,
**dadurch gekennzeichnet, daß**
die Abdeckplatte (1) mit einem genuteten Weicheisenblech (3) versehen ist, an welchem die Statorfläche ausgebildet ist, wobei die Polstruktur der Statorfläche durch quer zur Bewegungsrichtung verlaufende Quernuten (7) oder durch Kreuznuten (10) gebildet ist.

4. Statorplatte oder Statorelement nach Anspruch 3,
**dadurch gekennzeichnet, daß**
die Quernuten (7) bzw. Kreuznuten (10) mit einem nichtmagnetisierbaren Material (4) ausgefüllt sind.

5. Statorplatte nach Anspruch 3 oder 4,
**dadurch gekennzeichnet, daß**
wenigstens eine die Statorfläche aufweisende Abdeckplatte (1, 2) im wesentlichen aus dem genuteten Weicheisenblech (8) ausgebildet ist.

6. Statorplatte oder Statorelement nach Anspruch 3 oder 4,
**dadurch gekennzeichnet, daß** wenigstens eine die Statorfläche aufweisende Abdeckplatte (1, 2) eine Grundplatte (1) mit dem diese belegenden genuteten Weicheisenblech (3) ist.

7. Statorplatte oder Statorelement nach einem der vorhergehenden Ansprüche,
**dadurch gekennzeichnet, daß**
die Abdeckplatte der großflächigen Oberseite (1) und/oder die Abdeckplatte der dieser gegenüberliegenden großflächigen Unterseite (1) die Statorfläche aufweist.

8. Statorplatte oder Statorelement nach Anspruch 7,
**dadurch gekennzeichnet, daß**
zusätzlich wenigstens eine von seitlichen Abdeckplatten (2) eine Statorfläche aufweist.

9. Statorplatte oder Statorelement nach einem der vorhergehenden Ansprüche,
**dadurch gekennzeichnet, daß**
der Wabenstrukturkern (5, 6, 9) im wesentlichen aus Kunststoff oder Stahl oder Aluminium oder Aluminiumlegierungen besteht.

10. Statorplatte oder Statorelement nach Anspruch 9,
**dadurch gekennzeichnet, daß**
der Wabenstrukturkern (5, 6, 9) im wesentlichen aus Polykarbonat besteht.

11. Statorplatte oder Statorelement nach Anspruch 10,
**dadurch gekennzeichnet, d a ß**
der Wabenstrukturkern (9) im wesentlichen aus dünnwandigen, feinen Polykarbonatröhren besteht, die miteinander verklebt sind.

12. Statorplatte oder Statorelement nach einem der Ansprüche 1 bis 11, **dadurch gekennzeichnet, daß** der Wabenstrukturkern aus mehreren plattenförmigen Wabenstrukturkern-Teilen zusammengesetzt ist, in welchen die Ausrichtung der Wabenstruktur unterschiedlich ist.

13. Statorplatte oder Statorelement nach einem der Ansprüche 1 bis 12, **dadurch gekennzeichnet, daß** die Statorplatte bzw. das langgestreckte Statorelemnt im Winkel zueinander zusammengebaute Sandwichplatten mit Wabenstrukturkern aufweisen.

14. Statorplatte oder Statorelement nach einem der Ansprüche 1 bis 13, **dadurch gekennzeichnet, daß** die Statorplatte bzw. das langgestreckte Statorelement anstelle des Wabenstrukturkerns einen Hartschaumkern aufweisen.

15. Statorplatte oder Statorelement nach Anspruch 14, **dadurch gekennzeichnet, daß** von den Abdeckplatten eine Hohlprofilplatte mit in sich geschlossenem Profil gebildet wird, die mit einem Hartschaum ausgeschäumt ist.

16. Statorplatte oder Statorelement nach einem der Ansprüche 1 bis 15 als Bestandteil eines linearen elektrischen Direktantriebes.

## Claims

1. A stator plate or stator element of a linear electrical or electromagnetic direct drive wherein the stator plate is designed as a plane-parallel sandwich panel with a honeycomb structured core (5, 6, 9) and cover plates (1, 2) mounted on the honeycomb structured core (5, 6, 9) wherein at least one of the cover plates (1, 2) comprises a stator surface.

2. A stator plate or stator element according to claim 1, **characterized in that** at the stator plate mechanical guiding elements for guiding a drive part are provided and the stator surface depending on the kind of drive is provided with poles or permanent magnets or return rails.

3. A stator plate or stator element according to claim 1 or 2, **characterized in that** the cover plate (1) is provided with a grooved soft iron sheet (3) at which the stator surface is formed wherein the pole structure of the stator surface is formed by transverse grooves (7) extending transversely to the moving direction or by cross grooves (10).

4. A stator plate or stator element according to claim 3, **characterized in that** the transverse grooves (7) or the cross grooves (10), respectively, are filled with a non magnetizable material (4).

5. A stator plate according to claim 3 or 4, **characterized in that** at least one of the cover plates (1, 2) comprising the stator surface is basically formed by the grooved soft iron sheet (8).

6. A stator plate or stator element according to claim 3 or 4, **characterized in that** at least one of the cover plates (1, 2) comprising the stator surface is a base plate (1) which is covered by the grooved soft iron sheet (3).

7. A stator plate or stator element according to one of the previous claims, **characterized in that** the cover plate of the large surface upper side (1) and/ or the cover plate of the large surface bottom side (1) opposite thereto comprises the stator surface.

8. A stator plate or stator element according to claim 7, **characterized in that** additionally at least one of the lateral cover plates (2) comprises a stator surface.

9. A stator plate or stator element according to one of the previous claims, **characterized in that** the honeycomb structured core (5, 6, 9) is basically made from plastic or steel or aluminum or aluminum alloys.

10. A stator plate or stator element according to claim 9, **characterized in that** the honeycomb structured core (5, 6, 9) is basically made of poly-carbonate.

11. A stator plate or stator element according to claim 10, **characterized in that** the honeycomb structured core (9) basically consists of thin-walled, fine poly-carbonate tubes cemented with each other.

12. A stator plate or stator element according to one of the claims 1 to 11, **characterized in that** the honeycomb structured core consists of several board-shaped, honeycomb structured core parts wherein the honeycomb structures point to different directions.

13. A stator plate or stator element according to one of the claims 1 to 12, **characterized in that** the stator plate or the elongated stator element comprise sandwich panels with honeycomb structured core being mounted at an angle with respect to each other.

14. A stator plate or stator element according to one of the claims 1 to 13, **characterized in that** the stator plate or the elongated stator element instead of the honeycomb structured core comprise a high-resistance foam core.

15. A stator plate or stator element according to claim 14, **characterized in that** the cover plates form a hollow profile plate with a closed profile which is filled with high-resistance foam.

16. A stator plate or stator element according to one of the claims 1 to 15 as part of a linear electrical direct drive.

## Revendications

1. Plaque statorique ou élément statorique pour un dispositif d'entraînement direct électrique ou électromagnétique linéaire, la plaque statorique étant agencée sous la forme d'une plaque à structure sandwich à faces planes et parallèles, comportant un noyau (5, 6, 9) à structure en nid d'abeilles comportant des plaques de recouvrement (1, 2) fixées sur le noyau (5, 6, 9) à structure en nid d'abeilles, au moins l'une des plaques de recouvrement (1,2) possédant une surface statorique.

2. Plaque statorique ou élément statorique selon la revendication 1, **caractérisé en ce que** des éléments mécaniques de guidage servant à guider une partie du dispositif d'entraînement sont prévus sur la plaque statorique, et la surface statorique est équipée, en fonction du type d'entraînement, de pôles ou d'aimants permanents ou de rails conducteurs de retour du flux.

3. Plaque statorique ou élément statorique selon la revendication 1 ou 2, **caractérisé en ce que** la plaque de recouvrement (1) est équipée d'une tôle en fer doux rainurée (3), sur laquelle est formée la surface statorique, la structure à pôles de la surface statorique étant formée par des rainures transversales (7), qui s'étendent transversalement par rapport à la direction de déplacement, ou par des rainures croisées (10).

4. Plaque statorique ou élément statorique selon la revendication 3, **caractérisé en ce que** les rainures transversales (7) ou les rainures croisées (10) sont remplies par un matériau non aimantable (4).

5. Plaque statorique selon la revendication 3 ou 4, **caractérisé en ce qu'**au moins une plaque de recouvrement (1, 2), qui comporte la surface statorique, est formée essentiellement par la tôle en fer doux rainurée (8).

6. Plaque statorique ou élément statorique selon la revendication 3 ou 4, **caractérisé en ce qu'**au moins une plaque de recouvrement (1, 2) comportant la surface statorique est une plaque de base (1) comportant la tôle en fer doux (3) de revêtement rainurée.

7. Plaque statorique ou élément statorique selon l'une des revendications précédentes, **caractérisé en ce que** la plaque de recouvrement de la face supérieure (1) de surface étendue et/ou la plaque de recouvrement de la face inférieure (1) de surface étendue située à l'opposé de la précédente, comporte la surface statorique.

8. Plaque statorique ou élément statorique selon la revendication 7, **caractérisé en ce qu'**en outre au moins l'une des plaques latérales de recouvrement (2) comporte une surface statorique.

9. Plaque statorique ou élément statorique selon l'une des revendications précédentes, **caractérisé en ce que** le noyau (5, 6, 9) à structure en nid d'abeilles est formé essentiellement par une matière plastique ou de l'acier ou de l'aluminium ou des alliages d'aluminium.

10. Plaque statorique ou élément statorique selon la revendication 9, **caractérisé en ce que** le noyau (5, 6, 9) à structure en nid d'abeilles est formé essentiellement par du polycarbonate.

11. Plaque statorique ou élément statorique selon la revendication 10, **caractérisé en ce que** le noyau (9) à structure en nid d'abeilles est constitué essentiellement par des tubes fins en polycarbonate à paroi mince, qui sont collés les uns aux autres.

12. Plaque statorique ou élément statorique selon l'une des revendications 1 à 11, **caractérisé en ce que** le noyau à structure en nid d'abeilles est formé par l'assemblage de plusieurs parties en forme de plaques du noyau à structure en nid d'abeilles, dans lesquelles l'orientation de la structure en nid d'abeilles est différente.

13. Plaque statorique ou élément statorique selon l'une des revendications 1 à 12, **caractérisé en ce que** la plaque statorique ou l'élément statorique allongé comporte des plaques à structure sandwich assemblées entre elles sous un certain angle et comportant un noyau à structure en nid d'abeilles.

14. Plaque statorique ou élément statorique selon l'une des revendications 1 à 13, **caractérisé en ce que** la plaque statorique ou l'élément statorique allongé comporte, à la place du noyau à structure en nid d'abeilles, un noyau en mousse dure.

15. Plaque statorique ou élément statorique selon la revendication 14, **caractérisé en ce qu'**une plaque profilée creuse, qui possède un profil fermé sur lui-même et est garni d'une mousse dure, est formée par les plaques de recouvrement.

16. Plaque statorique ou élément statorique selon l'une des revendications 1 à 15, en tant que composant d'un dispositif d'entraînement direct électrique linéaire.
